**Europäisches Patentamt**

(19) **European Patent Office**

**Office européen des brevets**

(11) Veröffentlichungsnummer: **0 224 436
B1**

(12) ## EUROPÄISCHE PATENTSCHRIFT

(45) Veröffentlichungstag der Patentschrift:
26.07.89

(51) Int. Cl.⁴: **B65G 65/32**

(21) Anmeldenummer: **86810436.5**

(22) Anmeldetag: **03.10.86**

(54) Vorrichtung zum Beschicken von Schüttgutbehältern und deren Verwendung.

(30) Priorität: **31.10.85 CH 4683/85**

(43) Veröffentlichungstag der Anmeldung:
**03.06.87 Patentblatt 87/23**

(45) Bekanntmachung des Hinweises auf die Patenterteilung:
**26.07.89 Patentblatt 89/30**

(84) Benannte Vertragsstaaten:
**AT CH DE ES FR GB GR IT LI SE**

(56) Entgegenhaltungen:
**US-A- 4 034 870
US-A- 4 470 743**

(73) Patentinhaber: **SCHWEIZERISCHE ALUMINIUM AG,
CH-3965 Chippis(CH)**

(72) Erfinder: **Merz, Walter, Allmenbode 31,
CH-8700 Küsnacht(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zum Beschicken von entlüftbaren oder offenen Behältern für feinkörniges Schüttgut in einem pneumatischen Fördersystem, insbesondere mit Dichtstromförderung. Weiter bezieht sich die Erfindung auf die Verwendung der Vorrichtung.

In einem pneumatischen Fördersystem für feinkörniges Schüttgut werden mehrere Behälter, in der Regel als Silo ausgebildet, von einer Hauptleitung gespeist. Zu jeder Beschickungsöffnung in den Behältern führt eine von der Hauptleitung abzweigende Nebenleitung, gleichgültig ob pro Silo eine oder mehrere Eintrittsöffnungen ausgebildet sind. Neben diesen Abzweigungsleitungen müssen jedoch in bekannten Fördersystemen weitere Dispositionen getroffen werden, damit der Füllvorgang zum gegebenen Zeitpunkt beendet und der entsprechende Behälter verschlossen wird:

- Für jede Beschickungstelle sind zwei Ventile erforderlich, wobei je eines in der Hauptleitung und in der Abzweigleitung anzuordnen ist.
- Für jede Beschickungsstelle bzw. für jeden Behälter bei der Anordnung von mehreren Beschickungsstellen pro Behälter ist ein Niveauschalter erforderlich.

Beim Beschicken der Behälter werden sukzessive alle Beschickungsstellen bedient, indem die Hauptleitung unmittelbar nach der entsprechenden Abzweigleitung verschlossen und diese geöffnet wird. Dieser Vorgang wird durch eine elektronische Schaltanlage, welche von den Niveauschaltern Regelimpulse erhält, gesteuert.

Bei der Anordnung von mechanisch betätigbaren Absperrventilen haben sich oft Probleme ergeben, weil das feinkörnige bis staubförmige Schüttgut in die Lager eindringen und diese in ihrer Funktion empfindlich beeinträchtigen kann. In der DE-PS 30 22 656 und der EP-PS 26 735 wird eine wesentliche Verbesserung aufgezeigt, indem bei Dichtstromfördersystemen Abzweigungen ohne mechanische Vorrichtungen in der Förderleitung verschlossen werden können. Mit Magnetventilen können in Verzweigungen Schüttgutpfropfen gebildet werden, die nicht bis zu dem in der Förderleitung angeordneten Kugelhahn reichen. Dadurch können einerseits Leitungssysteme gebaut werden, die keine Verzweigungen bzw. kein Dreiwegehahn erfordern, und andererseits werden die die Förderleitungen verschliessenden Kugelhahnen vor einem direkten Kontakt mit dem Schüttgut geschützt. Bei geöffnetem Kugelhahn ist der Kontakt mit dem feinkörnigen Schüttgut für den Kugelhahn weniger gefährlich. Bei Verzweigungsleitungen zum Beschicken von Behältern werden die die Druckluftleitung des Dichtstromfördersystems verschliessenden Magnetventile durch Niveauschalter gesteuert.

Der Erfinder hat sich die Aufgabe gestellt, in einem pneumatischen Fördersystem für feinkörniges Schüttgut mit mehreren Beschickungsstellen für entlüftbare Behälter, insbesondere in Dichtstromfördersystemen, eine einfache, energiesparend arbeitende Vorrichtung zum Beschicken und Schliessen der Einfüllöffnung/en der Behälter zu schaffen, die weder Ventile noch individuelle Niveauschalter oder an dere individuelle Reguliersysteme erforderlich macht, wobei die Vorrichtung in einem breitem Verwendungsspektrum einsetzbar sein soll.

Die Aufgabe wird erfindungsgemäss gelöst durch
- ein starr befestigtes Mantelrohr mit einem oberen Flansch und zwei im oberen Bereich eingesetzten Rohrstücken zum Einbau in die Förderleitung,
- ein am oberen Flansch festgelegtes, das Mantelrohr dicht verschliessendes Huborgan aus flexiblem Material, welches vertikal zur Axialrichtung des Mantelrohrs mindestens die doppelte Innenfläche $F_H$ der Innenfläche $F_M$ des Mantelrohrs aufweist,
- ein in Axialrichtung bewegbares Schliessorgan für die Unterseite des Mantelrohrs, und
- eine am Huborgan befestigte Zugstange mit höhenverstellbarer Festlegung für das Schliessorgan,
wobei das Gewicht des in Axialrichtung bewegbaren Teils des Huborgans, des Schliessorgans und der Zugstange grösser als die Federkraft des Huborgans, jedoch kleiner als das Produkt, gebildet aus der Differenz der Flächen $F_H$ und $F_M$ und dem auf das Huborgan einwirkenden Ueberdruck in der Förderleitung ist, und die Entfernung des Schliessorgans vom unteren Rand des Mantelrohrs kleiner ist als der Hub des Huborgans.

Mit der erfindungsgemässen Vorrichtung ist kein Auftrieb durch das feinkörnige Schüttgut verbunden. Sie hat deshalb nichts mit einem Schwimmkörper gemeinsam. Sie arbeitet selbstregulierend. Bei Einfüllstellung drückt das Gewicht des bewegbaren Teils des Huborgans, der Zugstange und des Schliessorgans das Huborgan zusammen. Erreicht das Schüttgut im Verlauf des Füllprozesses, unter Ueberschüttung des Schliessorgans, den unteren Rand des Mantelrohrs, so wird der zur Hebung des Schliessorgans notwendige Innendruck aufgebaut.

Nach einer ersten Variante besteht das Huborgan aus einem Balgzylinder, der im wesentlichen aus einem synthetischen Material, vorzugsweise synthetischem Gummi, besteht. Dieses Material kann eine Gewebeeinlage oder eine andere Armierung aufweisen, wie sie aus der Fahrzeugreifenindustrie bekannt sind. Der Balgzylinder besteht, je nach dem Hubbedarf für das Schliessorgan, vorzugsweise aus ein bis drei Einzelbälgen mit einem Hub von zweckmässig je 20-100 mm. Die Deckfläche des Balgzylinders wird in der Praxis durch eine metallische Platte gebildet, in welcher die Zugstange befestigt ist. Weiter können die einzelnen Bälge ringförmige Metalleinlagen mit Stützfüssen haben, welche ein vollständiges Aufeinanderliegen der Bälge verhindern und so den Druckaufbau erleichtern.

Nach einer weiteren Variante kann das Huborgan als Metallwellschlauch ausgebildet sein, welcher vorzugsweise aus Aluminium, Stahl oder Messing besteht und mit einer Platte zur Befestigung der Hubstange versehen ist.

Schliesslich kann das Huborgan als vorgeformte Membrane ausgebildet sein, die bei Druckanwendung von der unteren in die obere Stellung umklappt. Diese Membrane besteht beispielsweise aus einem synthetischen Material, mit oder ohne Gewebeeinlage bzw. Armierung, oder einem Metall, wobei dieselben Materialien wie beim Balgzylinder bzw. Metallwellschlauch verwendet werden. Vorrichtungen mit einem als vorgeformte Membrane ausgebildeten Huborgan können jedoch nur verwendet werden, wenn verhältnismässig kleine Hübe erforderlich sind, beispielsweise bis 40 mm.

Die Fläche des Huborgans $F_H$, welche bei Druckanwendung wirksam wird, beträgt vorzugsweise das 2-5 fache der Innenfläche des Mantelrohrs $F_M$. Aus praktischen Gründen wird die erfindungsgemässe Vorrichtung normalerweise so konzipiert, dass $F_H$ den 2,5-3,5 fachen, insbesonderen etwa den 3 fachen Wert von $F_M$ annimmt.

Das bei Druckanwendung mit dem unteren Rand des Mantelrohrs dichtend in Eingriff stehende Schliessorgan ist vorzugsweise als sich nach oben verjüngender Kegelstumpf ausgebildet. Das Schliessorgan kann jedoch auch als nach oben runde Halbkugel, Kugelzone, Kugelsektor, Kugelabschnitt oder auch als Kugel ausgebildet sein. Nach dem Hochziehen ragt das Schliessorgan teilweise in das Mantelrohr hinein, was der Schliessstellung entspricht.

Je nach Federkraft des Huborgans kann das Schliessorgan mindestens teilweise hohl ausgebildet sein, was die erforderliche Hebekraft entsprechend reduziert.

Der dichtende Verschluss zwischen dem Schliessorgan und der unteren Oeffnung des Mantelrohrs kann beispielsweise durch Einlegen einer Dichtung in das Mantelrohr verbessert werden. Im einfachsten Fall wird ein O-Ring eingesetzt.

Die das Hub- und das Schliessorgan verbindende Zugstange ist nach einer ersten Variante auf einer Seite starr mit dem Huborgan bzw. dessen Deckplatte verbunden und trägt auf der andern Seite das Schliessorgan. Die in der erfindungsgemässen Vorrichtung eingesetzte Zugstange nach dieser Variante durchgreift im Mantelrohr ein bis zwei daran befestigte Führungen.

Nach einer zweiten bzw. dritten Variante ist die Zugstange mittels eines Scharniers oder eines Kugelgelenks an das Huborgan bzw. an dessen Deckplatte angelenkt. In diesem Fall fehlt die zentrierende Führung im Mantelrohr, durch die konus- oder kugelförmige Ausbildung des Schliessorgans wird dieses durch das Hochheben zentriert.

Die Zugstange kann als Gewindestange ausgebildet sein, wodurch sie in das Huborgan bzw. dessen Deckplatte einschraubbar ist und sich die Höheneinstellung des Schliessorgans mittel einer oben und unten eingesetzten Schraubenmutter anbietet. Selbstverständlich kann jedoch die Zugstange auch ohne Gewinde ausgebildet sein, wobei die starre Befestigung im Huborgan bzw. dessen Deckplatte mittels Schweissen und die Höhenverstellung des Schliessorgans mit anderen bekannten Klemm- oder Fixierorganen erfolgen kann.

Die erfindungsgemässe Vorrichtung kann zum Beschicken und Schliessen von allen Behältern für feinkörniges Schüttgut verwendet werden, die nicht selektiv beschickt werden müssen. Eine besonders vorteilhafte Verwendung besteht im Beschicken und Schliessen von Tonerdesilos auf Schmelzflusselektrolysezellen zur Herstellung von Aluminium. Je nach Zellengrösse werden zwei bis sechs mit je einer erfindungs gemässen Vorrichtung bestückte Silos angeordnet. Beispielsweise alle sechs Stunden wird die zu den auf den Zellen angeordneten Silos führende Dichtstromförderanlage eingeschaltet und diese Solis nachgefüllt. Mit derselben Hauptleitung können beispielsweise zwölf Elektrolysezellen beschickt werden, wobei diese Silos in Förderrichtung einer nach dem andern gefüllt wird. Der im letzten Silo angeordnete Niveauanzeiger bekannter Bau- und Funktionsart schaltet die Dichtstromförderanlage automatisch aus.

Sinngemäss kann die erfindungsgemässe Vorrichtung in zahlreichen Industriezweigen eingesetzt werden, wie in Förderanlagen für Kunststoffpulver, Zement oder Quarzpulver.

Die Erfindung wird anhand der Zeichnung näher erläutert. Die schematischen Längsschnitte zeigen:

- Fig. 1 das Konzept einer Vorrichtung,
- Fig. 2 eine erste Variante des Huborgans und der Befestigung der Zugstange,
- Fig. 3 eine zweite Variante des Huborgans und der Befestigung der Zugstange, mit einem Schliessorgan,
- Fig. 4 eine Variante der Vorrichtung, insbesondere des unteren Teils des Mantelrohrs mit dem Schliessorgan,
- Fig. 5 der obere Bereich eines Silos mit eingesetzter Vorrichtung, zu Beginn des Beschickens,
- Fig. 6 den Silo von Fig. 5, wobei da eingefüllte feinkörnige Schüttgut das Mantelrohr erreicht hat, und
- Fig. 7 den Silo von Fig. 5 und 6 am Ende des Beschickens, mit hochgezogenem Schliessorgan.

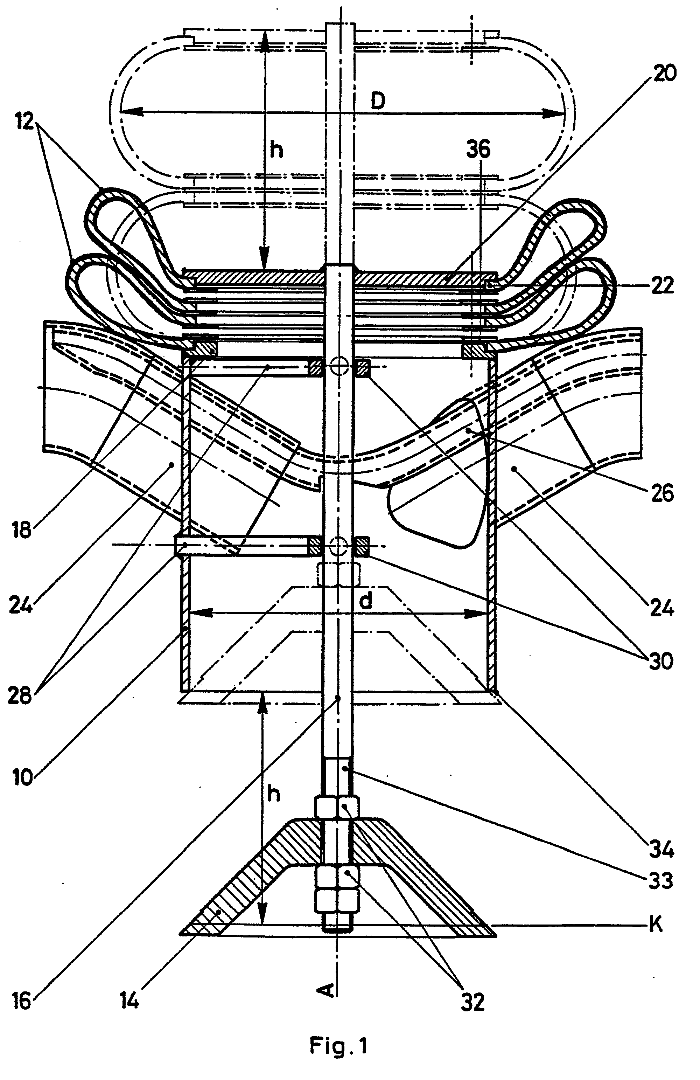

Die in Fig. 1 dargestellte Vorrichtung zum Beschicken und Schliessen von entlüftbaren Behältern besteht im wesentlichen aus
- einem Mantelrohr 10,
- einem Huborgan 12,
- einem Schliessorgan 14 und
- einer Zugstange 16, welche das Hub- und das Schliessorgan in einem einstellbaren Abstand verbindet.

Im vorliegenden Fall besteht das Huborgan 12 aus einem doppelten Balg. Dieser ist auf einem oberen Flansch 18 des Mantelrohrs 10 in bekannter Weise befestigt. Nach oben ist der aus synthetischem Gummi bestehende doppelte Balg mit einer ebenen, metallischen Deckplatte 20 an der Stelle 22 verschlossen. Im Bereich der Längsachse A des Mantelrohrs 10 ist die Zugstange 16 mit der Deckplatte 20 verschweisst und ragt axial in das Mantelrohr 10.

Im oberen Bereich des Mantelrohrs 10 sind zwei leicht nach oben geneigte Rohrstücke 24 diagonal gegenüberliegend eingesetzt, welche an die Förderleitung angeschlossen werden und als Zufluss- bzw. Abflussrohr im Dichtstromförderungssystem dienen. Die Leitung 26 für die Förderluft ist gestrichelt angedeutet.

Im Mantelrohr 10 sind in Abstand zwei Führungen befestigt, welche aus zwei rechtwinkligen Schenkeln 28 und einer Hülse 30 für die Zugstange 16 bestehen.

Im unteren Bereich der Zugstange 16 ist das als sich nach oben verjüngender, hohler Kegelstumpf ausgebildete Schliessorgan 14 mittels Schraubenmuttern 32 befestigt, wobei die Zugstange 16 im unteren Bereich mit einem entsprechenden Gewinde 33 versehen ist.

Auf der Konusfläche ist ein Schnittkreis K eingezeichnet, der exakt dem Umfang des inneren Querschnitts des Mantelrohrs 10 entspricht. Der Abstand h dieses Schnittkreises K vom unteren Rand 34 des Mantelrohrs 10 entspricht der Hubhöhe des als doppelter Balg ausgebildeten Huborgans 12, was aus der strichpunktiert gezeichneten Schliesslage ersichtlich ist.

Der Innendurchmesser d des Mantelrohrs 10 begrenzt die Fläche $F_M$, der Innendurchmesser D eines Balgs die Fläche $F_H$.

Das Eigengewicht des Schliessorgans 14, der Zugstange 16 und des beweglichen Teils des Huborgans 12 zieht den doppelten Balg zusammen. Metallringe 36 mit abkragenden Nocken bzw. in radialer Richtung verlaufenden Oeffnungen verhindern, dass ein Balg vollständig verschlossen wird.

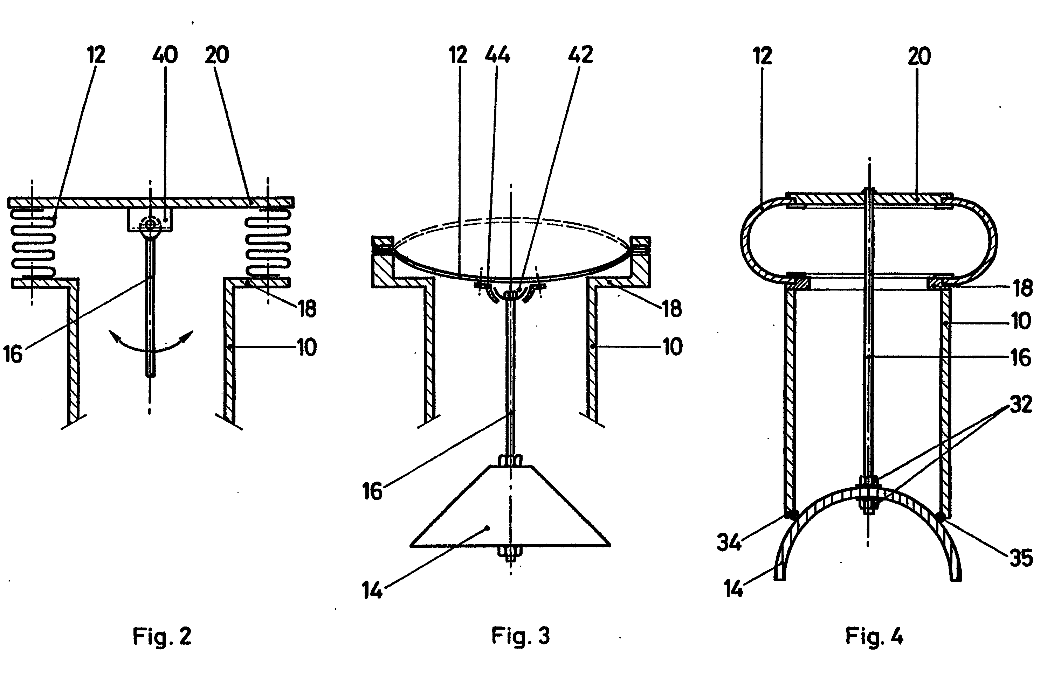

Nach Fig. 2 ist das Huborgan 12 aus Metallwellschlauch ausgebildet, wobei die Zugstange 16 über ein Scharnier 40 an der Deckplatte 20 befestigt ist. So kann die Zugstange 16 im Mantelrohr 10 frei pendeln, falls ihre Bewegungsfreiheit nicht durch eine Führung im Metallrohr eingeschränkt ist.

In Fig. 3 ist das Huborgan 12 als umklappbare Membrane ausgebildet. Die obere, bei Druckanwendung erreichte Lage ist gestrichelt eingezeichnet. Die Zugstange 16 ist über ein Kugelgelenk 42 an der Membrane bzw. an einer Halterung 44 befestigt. Damit ist die Zugstange im Mantelrohr 10 allseitig beweglich und wird durch das Einziehen des Schliessorgans 14 zentriert. Das Schliessorgan 14 ist als Kegelstumpf ausgebildet.

Gemäss Fig. 4 ist das Schliessorgan 14 als hohle, nach unten offene Halbkugel ausgebildet, die mittels zweier Schraubenmuttern 32 auf der Zugstange 16 befestigt ist. Das Schliessorgan 12 ist in angehobener Stellung gezeichnet, im Innern des Mantelrohrs 10 und des Huborgans 12 ist ein Druck aufgebaut. Der untere Rand 34 des Metallrohrs trägt zum besseren Verschluss bei, indem eine als O-Ring ausgebildete Dichtung 35 eingelegt ist, welche direkt auf der Kugeloberfläche aufliegt.

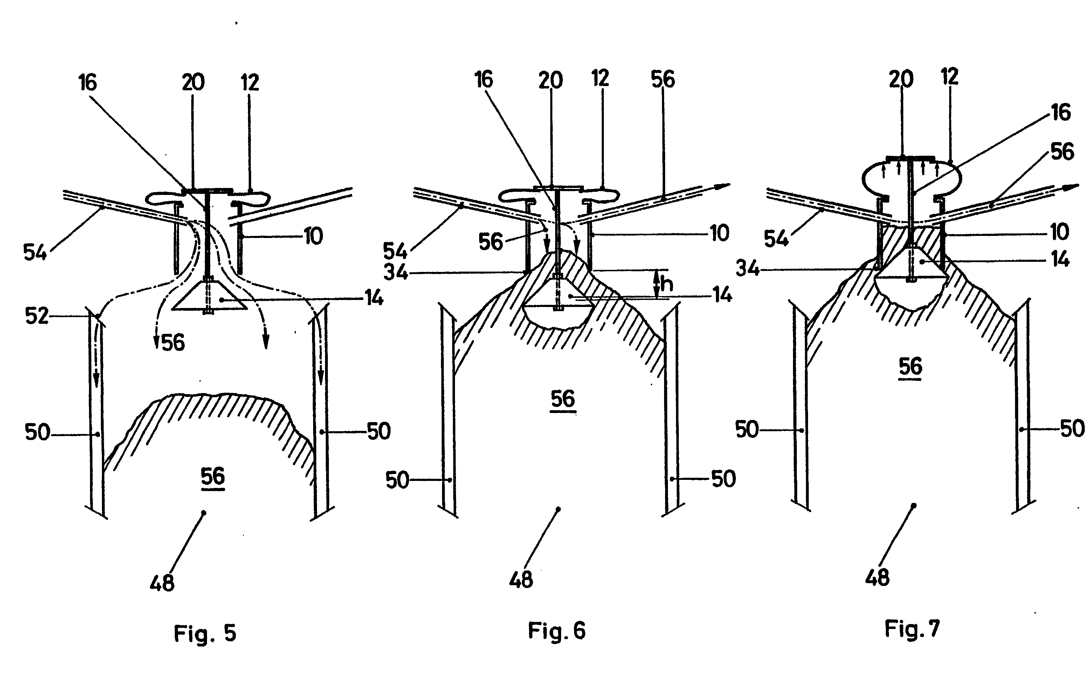

Die Fig. 5 bis 7 zeigen, stark stilisiert, in Tonerdesilos, von denen nur der obere Teil dargestellt ist, eingesetzte erfindungsgemässe Vorrichtungen, wobei ebenfalls der Ablauf des Beschickungsprozesses dargestellt wird. Die Tonerdesilos 48 haben mindestens eine Entlüftungsleitung 50 oder einen entsprechend ausgebildeten Entlüftungsmantel, wobei deren oberer Rand 52 so angeordnet ist, dass die Luft ungehindert eintreten kann, aber das eingefüllte Schüttgut bei maximaler Füllstellung diese Eintrittsöffnung wegen des Schüttwinkels nicht erreichen kann. In der Praxis sind die Silos 48 oben verschlossen und das Mantelrohr 10 in der/den Einfüllöffnung/en befestigt.

Nach Fig. 5 erreicht die Tonerde 56 mit der zur Dichtstromförderung erforderlichen Luftmenge über die Einspeiseleitung 54 die Vorrichtung. Wegen des Eingengewichts des kegelstumpfförmigen Schliessorgans 14, der Zugstange 16 und der Deckplatte 20 ist das aus einem Balg bestehende Huborgan 12 in zusammengedrückter Position. Die Tonerde 56 fällt über den Kegelstumpf in den Silo 48, die Luft strömt ebenfalls in den Behälter und durch die Entlüftungsleitung 50 ins Freie.

Dieser Füllvorgang dauert so lange an, bis die Tonerde 56 den unteren Rand 34 des Mantelrohrs 10 erreicht hat. Dieses Stadium ist in Fig. 6 dargestellt. Jetzt wird die freie Luftausströmung in den Tonerdesilo 48 vorerst reduziert und bei weiterem Auffüllen ganz unterbrochen. Dadurch bildet sich im Mantelrohr und Huborgan ein Druckanstieg. Ein Teil der Tonerde 56 füllt das Mantelrohr 10, ein anderer Teil wird bereits zum nächsten Tonerdesilo geführt.

Da die Fläche $F_H$ des Balges etwa dreimal so gross ausgebildet ist wie die Innenfläche $F_M$ des Mantelrohrs, entsteht allmählich, bei sich stets erhöhendem Innendruck, eine zum Heben des Schliessorgans 14 und der Zugstange 16 ausreichende Kraft. Der maximale Druck im Mantelrohr 10 und Huborgan 12 ist erreicht, wenn das Schliessorgan nach dem Zurücklegen des Hubs h und den unteren Rand 34 des Mantelrohrs 10 anschlägt und satt am Mantelrohr 10 anliegt. Dieses Stadium ist in Fig. 7 dargestellt.

Nach dem Verschluss des ersten Tonerdesilos besteht für das feinkörnige Schüttgut und die Luft dieser erste Weg des geringsten Widerstandes nicht mehr, alle Tonerde 56 wird von der Förderkraft zum nächsten Silo geführt, welcher ebenfalls mit einer erfindungsgemässen Vorrichtung versehen ist. Dort wird der gleiche, in Fig. 5 bis 7 dargestellte Füllprozess wiederholt.

Der letzte Tonerdesilo in der Reihe enthält einen Niveauschalter, welcher bei vollem Silo die Dichtstromförderanlage ausschaltet.

## Patentansprüche

1. Vorrichtung zum Beschicken von entlüftbaren oder offenen Behältern für feinkörniges Schüttgut in einem pneumatischen Fördersystem, insbesondere mit Dichtstromförderung, gekennzeichnet durch

- ein starr befestigtes Mantelrohr (10) mit einem oberen Flansch (18) und zwei im oberen Bereich eingesetzten Rohrstücken (24) zum Einbau in die Förderleitung,
- ein am oberen Flansch (18) festgelegtes, das Mantelrohr (10) dicht verschliessendes Huborgan (12) aus flexiblem Material, welches vertikal zur Axialrichtung (A) des Mantelrohrs (10) mindestens die doppelte Innenfläche ($F_H$) der Innenfläche ($F_M$) des Mantelrohrs (10) aufweist,
- ein in Axialrichtung (A) bewegbares Schliessorgan (14) für die Unterseite des Mantelrohrs (10), und

- eine am Huborgan (12) befestigte Zugstange (16) mit höhenverstellbarer Festlegung für das Schliessorgan (14),
wobei das Gewicht des in Axialrichtung (A) bewegbaren Teils des Huborgans (12), des Schliessorgans (14) und der Zugstange (16) grösser als die Federkraft des Huborgans, jedoch kleiner als das Produkt, gebildet aus der Differenz der Flächen ($F_H$) und ($F_M$) und dem auf das Huborgan (12) einwirkenden Ueberdruck in der Förderleitung ist, und die Entfernung (h) des Schliessorgans (14) vom unteren Rand (34) des Mantelrohrs (10) kleiner ist als der Hub des Huborgans (12).

2. Vorrichtung nach Anspruch 1, dadurch gekennzeichnet, dass das Huborgan (12) ein Balgzylinder im wesentlichen aus einem synthetischen Material, vorzugsweise synthetischem Gummi, ist, wobei eine metallische Deckplatte (20) zur Befestigung der Zugstange (16) vorgesehen ist.

3. Vorrichtung nach Anspruch 1, dadurch gekennzeichnet, dass das Huborgan (12) ein Metallwellschlauch, vorzugsweise aus Stahl, Aluminium oder Messing, ist.

4. Vorrichtung nach Anspruch 1, dadurch gekennzeichnet, dass das Huborgan (12) eine vorgeformte Membrane ist, die vorzugsweise aus einem synthetischem Material oder einem Metall besteht und von einer Lage in die andere kippbar ist.

5. Vorrichtung nach einem der Ansprüche 1 bis 4, dadurch gekennzeichnet, dass die Fläche ($F_H$) des Huborgans (12) das 2-5 fache, vorzugsweise das 2,5-3,5 fache der Innenfläche ($F_M$) des Mantelrohrs (10) beträgt.

6. Vorrichtung nach einem der Ansprüche 1 bis 5, dadurch gekennzeichnet, dass das Schliessorgan (14) als sich nach oben verjüngender Kegelstumpf, als nach oben runde Halbkugel, Kugelzone, Kugelsektor, Kugelabschnitt oder als Kugel ausgebildet ist, wobei das Schliessorgan (14) in Schliessstellung teilweise in das Mantelrohr (10) hineinragt.

7. Vorrichtung nach Anspruch 6, dadurch gekennzeichnet, dass das Schliessorgan (14) mindestens teilweise hohl ausgebildet ist.

8. Vorrichtung nach einem der Ansprüche 1 bis 7, dadurch gekennzeichnet, dass die Zugstange (15) starr, vorzugsweise mittels eines Gewindes oder einer Schweissnaht, mit dem Huborgan (12) bzw. dessen Deckplatte (20) verbunden ist und 1-2 im Mantelrohr (10) befestigte Führungen (26) durchgreift.

9. Vorrichtung nach einem der Ansprüche 1 bis 7, dadurch gekennzeichnet, dass die Zugstange (16) mittels eines Scharniers (40) oder eines Kugelgelenks (42) an das Huborgan (12) bzw. an dessen Deckplatte (20) angelenkt ist.

10. Verwendung einer Vorrichtung nach einem der Ansprüche 1 bis 9 auf einem Tonerdesilo zur Speisung von Schmelzflusselektrolysezellen für die Herstellung von Aluminium, einem Kunststoffpulversilo, einem Zementsilo oder einem Quarzsilo für Giessereien.

## Claims

1. Device for charging containers with provision for air exhaust or open containers for finegrained bulk material in a pneumatic conveying system, in particular with dense-phase conveying, characterized by
- a rigidly secured tube (10) having an upper flange (18) and two pipe pieces (24), inserted in the upper region, for installation in the conveying line,
- a lifting member (12) of flexible material which is fixed on the upper flange (18), seals the casing tube (10) in leakproof fashion and, perpendicular to the axial direction (A) of the casing tube (10), has an internal area ($F_H$) which is at least twice the internal area ($F_M$) of the casing tube (10),
- a closing member (14), which can be moved in the axial direction (A), for the underside of the casing tube (10) and
- a connecting rod (16) secured on the lifting member (12) and having vertically adjustable fixing for the closing member (14), the weight of that part of the lifting member (12) which can be moved in the axial direction (A), of the closing member (14) and of the connecting rod (16) being greater than the spring force of the lifting member but less than the product formed from the difference of the areas ($F_H$) and ($F_M$) and the excess pressure in the conveying line acting on the lifting member (12), and the distance (h) of the closing member (14) from the lower rim (34) of the casing tube (10) being smaller than the travel of the lifting member (12).

2. Device according to Claim 1, characterized in that the lifting member (12) is a bellows cylinder composed essentially of a synthetic material, preferably synthetic rubber, a metal cover plate (20) being provided for securing the connecting rod (16).

3. Device according to Claim 1, characterized in that the lifting member (12) is a flexible corrugated metal tube, preferably of steel, aluminium or brass.

4. Device according to Claim 1, characterized in that the lifting member (12) is a preformed diaphragm which is preferably composed of a synthetic material or of a metal and can be flipped over from one position to the other.

5. Device according to one of Claims 1 to 4, characterized in that the area ($F_H$) of the lifting member (12) is 2–5 times, preferably 2.5–3.5 times, the internal area ($F_M$) of the casing tube (10).

6. Device according to one of Claims 1 to 5, characterized in that the closing member (14) is designed as a truncated cone which tapers upwards, as an upwardly round hemisphere, spherical segment, spherical sector, spherical portion partially into the casing tube (10) or as a sphere, the closing member (14) protruding in the closing position.

7. Device according to Claim 6, characterized in that the closing member (14) is of at least partially hollow design.

8. Device according to Claims 1 to 7, characterized in that the connecting rod (16) is connected rigidly, preferably by means of a screw thread or a weld seam, to the lifting member (12) or its cover plate (20) and passes through 1–2 guides (26) secured in the casing tube (10).

9. Device according to one of Claims 1 to 7, characterized in that the connecting rod (16) is articulated on the lifting member (12) or its cover plate (20) by means of a hinge (40) or a ball joint (42).

10. Use of a device according to one of Claims 1 to 9 on an alumina silo for feeding molten-salt electrolysis cells for the production of aluminium, on a plastics powder silo, on a cement silo or on a quartz silo for foundries.

**Revendications**

1. Dispositif de chargement de réservoirs pour matériau en vrac de fine granulométrie, pouvant être reliés à l'air libre ou ouverts, dans un système de transport pneumatique, en particulier avec transport par écoulement étanche, caractérisé
    – par une enveloppe tubulaire (10) rigidement fixée et comportant un rebord supérieur (18) et deux éléments tubulaires (24), insérés dans la zone supérieure et à monter dans la conduite de transport,
    – par un organe de levage (12) en matériau souple, qui est fixé au rebord supérieur (18), qui obture de façon étanche l'enveloppe tubulaire (10) et qui présente, perpendiculairement à la direction axiale (A) de l'enveloppe tubulaire (10), une surface intérieure ($F_H$) au moins double de la surface intérieure ($F_M$) de l'enveloppe tubulaire (10),
    – par un obturateur (14), mobile dans la direction axiale (A), pour le côté inférieur de l'enveloppe tubulaire (10) et
    – par un tirant (16), fixé à l'organe de levage (12), avec fixation, réglable en hauteur, pour l'obturateur (14), étant précisé que le poids de la partie, mobile dans la direction axiale (A), de l'organe de levage (12), de l'obturateur (14) et du tirant (16) est supérieur à la force élastique de l'organe de levage, mais inférieur au produit de la différence entre les surfaces ($F_H$) et ($F_M$) et de la surpression, agissant sur l'organe de levage (12), dans la conduite de transport; et étant précisé que la distance (h) entre l'obturateur (14) et le bord inférieur (34) de l'enveloppe tubulaire (10) est inférieure à la course de l'organe de levage (12).

2. Dispositif selon la revendication 1, caractérisé en ce que l'organe de levage (12) est un soufflet cylindrique, essentiellement en un matériau synthétique, de préférence en caoutchouc synthétique, étant précisé qu'une plaque métallique de recouvrement (20) est prévue pour le fixer au tirant (16).

3. Dispositif selon la revendication 1, caractérisé en ce que l'organe de levage (12) est un tube ondulé souple métallique, de préférence en acier, en aluminium ou en laiton.

4. Dispositif selon la revendication 1, caractérisé en ce que l'organe de levage (12) est une membrane préformée qui est de préférence constituée d'un matériau synthétique ou d'un métal et qui peut, par rabattement, passer d'une position à l'autre.

5. Dispositif selon l'une des revendications 1 à 4, caractérisé en ce que la surface ($F_H$) de l'organe de levage (12) vaut 2–5 fois, de préférence 2,5–3,5 fois la surface intérieure ($F_M$) de l'enveloppe tubulaire (10).

6. Dispositif selon l'une des revendications 1 à 5, caractérisé en ce que l'obturateur (14) est conçu sous forme d'un tronc de cône qui va en se rétrécissant vers le haut, sous forme d'une demi-sphère, d'une zone sphérique, d'un secteur sphérique, d'une calotte sphérique ou d'une sphère, ronds vers le haut, étant précisé que l'obturateur (14), en position de fermeture, pénètre partiellement dans l'enveloppe tubulaire (10).

7. Dispositif selon la revendication 6, caractérisé en ce que l'obturateur (14) est prévu au moins partiellement creux.

8. Dispositif selon l'une des revendications 1 à 7, caractérisé en ce que le tirant (16) est relié rigidement, de préférence au moyen d'un filetage ou d'un cordon de soudure, à l'organe de levage (12) ou à sa plaque de recouvrement (20), et passe dans des guidages (26) fixés dans l'enveloppe tubulaire (10).

9. Dispositif selon l'une des revendications 1 à 7, caractérisé en ce que le tirant (16) est articulé, au moyen d'une charnière (40) ou d'un joint à rotule (42), à l'organe de levage (12) ou à sa plaque de recouvrement (20).

10. Emploi d'un dispositif selon l'une des revendications 1à 9, sur un silo d'alumine pour l'alimentation des cellules d'électrolyse du bain de fusion pour la fabrication de l'aluminium, sur un silo de poudre plastique, sur un silo de ciment ou sur un silo de quartz pour fonderies.

EP 0 224 436 B1

Fig. 1

Fig. 4

Fig. 3

Fig. 2

Fig. 5

Fig. 6

Fig. 7

EP 0 224 436 B1